# EUROPÄISCHE PATENTSCHRIFT

(11) **EP 2 240 519 B1**
(45) Veröffentlichungstag und Bekanntmachung des Hinweises auf die Patenterteilung: **04.04.2012**
(21) Anmeldenummer: 09705025.6
(22) Anmeldetag: 29.01.2009
(51) Int. Cl.: C08F 8/32, C08F 10/10, C10L 1/22, C10L 10/18, C10L 1/14

(54) **SPEZIELLE POLYISOBUTENAMINE UND IHRE VERWENDUNG ALS DETERGENTIEN IN KRAFTSTOFFEN**
SPECIAL POLYISOBUTENE AMINES, AND USE THEREOF AS DETERGENTS IN FUELS
POLYISOBUTÈNE-AMINES SPÉCIFIQUES, ET LEUR UTILISATION COMME DÉTERGENTS DANS DES CARBURANTS

(30) Priorität: 01.02.2008 EP 08101217
(43) Veröffentlichungstag der Anmeldung: 20.10.2010
(73) Patentinhaber: BASF SE, 67056 Ludwigshafen (DE)
(72) Erfinder: FEHR, Erich K., 34246 Vellmar (DE); POSSELT, Dietmar, 69120 Heidelberg (DE); SPANG, Peter, 66386 St Ingbert (DE); SCHWAHN, Harald, 69120 Heidelberg (DE); WALTER, Marc, 67227 Frankenthal (DE)
(86) Internationale Anmeldenummer: PCT/EP2009/051010
(87) Internationale Veröffentlichungsnummer: WO 2009/095443

(56) Entgegenhaltungen:
- EP-A- 1 967 568
- WO-A-00/47698
- WO-A-03/085011
- CN-A- 101 220 116
- DE-A1- 19 948 114

## Beschreibung

Die vorliegende Erfindung betrifft neue Polyisobutenamine der allgemeinen Formel I

R¹-CH₂-NR²R³ (I)

in der
die Variable R¹ einen von Isobuten und bis zu 20 Gew.-% n-Buten abgeleiteten Polyisobutylrest mit einem zahlenmittleren Molekulargewicht Mₙ von 600 bis 770 darstellt und
die Variablen R² und R³ unabhängig voneinander für Wasserstoff, einen C₁-C₁₈-Alkyl-, C₂-C₁₈-Alkenyl-, C₄-C₁₈-Cycloalkyl-, C₁-C₁₈-Alkylaryl-, Hydroxy-C₁-C₁₈-alkyl-, Poly(oxy-alkyl)-, Polyalkylenpolyamin- oder einen Polyalkylenimin-Rest oder zusammen mit dem Stickstoffatom, an das sie gebunden sind, für einen heterocyclischen Ring stehen,
welche durch Umsetzung eines Polyisobutens, das wenigstens eine der folgenden Eigenschaften aufweist:
[a] Anteil an Vinyliden-Doppelbindungen von mindestens 60 Mol%, bezogen auf das Polyisobuten;
[b] Gehalt an Isobuten-Einheiten im Polyisobuten-Polymergerüst von mindestens 85 Gew.-%;
[c] Polydispersität von 1,05 bis 7
mit Kohlenmonoxid und Wasserstoff in einer Hydroformylierungsreaktion in Gegenwart eines Hydroformylierungs-Katalysators und Unterwerfung des so hergestellten Oxo-Zwischenproduktes einer reduktiven Aminierung in Gegenwart von Wasserstoff, einer geeigneten Stickstoffverbindung und eines geeigneten Katalysators erzeugt wurden.

Weiterhin betrifft die vorliegende Erfindung Kraftstoffzusammensetzungen, insbesondere solche mit einem Gehalt an C₁-C₄-Alkanolen, welche die Polyisobutenamine in einer als Detergenz wirksamen Menge enthalten.

Weiterhin betrifft die vorliegende Erfindung die Verwendung dieser Polyisobutenamine als Kraftstoffadditive zur Verbesserung der Verträglichkeit der Detergentien mit Trägerölen, insbesondere bei tiefen Temperaturen, und/oder zur Verbesserung der Verträglichkeit in Kraftstoffzusammensetzungen, welche einen mineralischen Kraftstoffanteil und C₁-C₄-Alkanole enthalten.

Aus der EP 0 244 616 A2 {1} sind Polybutyl- und Polyisobutenamine der allgemeinen Formel R¹-CH₂-NR²R³ bekannt, worin R¹ einen von Isobuten und bis zu 20 Gew.-% n-Buten abgeleiteten Polybutyl- oder Polyisobutylrest darstellt und ein zahlenmittleres Molekulargewicht Mₙ von 300-5000, vorzugsweise von 500-2500 und gemäß den experimentellen Beispielen von 900-1000 aufweist. Diese Polybutyl- und Polyisobutenamine lassen sich durch Hydroformylierung der zugrunde liegenden Poly(iso)butene und anschließende hydrierende Aminierung der enthaltenen Oxoprodukte erhalten. Sie werden als Kraftstoff-Detergentien mit ventilreinigender oder ventilreinhaltender Wirkung empfohlen.

In der WO 2004/087808 A1 {2} werden Formulierungen aus Polyalkenaminen und Lösungsmitteln mit verbesserten Tieftemperatureigenschaften beschrieben, die Ausdruck in einem niedrigeren Cloud Point, einem niedrigeren Pour Point und/oder einer verbesserter Tieftemperatur-Lagerstabilität der Formulierung finden. Die diesen Polyalkenaminen zugrunde liegenden Polyalkene weisen ein zahlenmittleres Molekulargewicht Mₙ von insbesondere "etwa 500 bis etwa 5000 oder etwa 800 bis 1200, oder 850 bis 1100, wie z.B. etwa 1000" auf. Vorzugsweise ist dieses Polyalken ein Polyisobuten. Ein bevorzugtes Verfahren zur Herstellung von auf Polyisobuten basierenden Polyalkenaminen ist die Hydroformylierung des zugrunde liegenden Polyisobutens und die nachfolgende reduktive Aminierung des Oxo-Zwischenproduktes. Die in den experimentellen Beispielen offenbarten konkreten Polyisobutenamine weisen zahlenmittlere Molekulargewicht Mₙ von 950 bzw. 1000 auf. Derartige Formulierungen aus Polyalkenaminen und Lösungsmitteln können als Additive in Ottokraftstoffen eingesetzt werden, insbesondere zur Verbesserung der Einlasssystem-reinigenden Wirkung von Ottokraftstoffen, wobei diese Ottokraftstoffe auch überwiegende Mengen an C₁-C₄-Alkanolen, beispielsweise 15 Vol.-% Methanol, 65 Vol.-% Ethanol, 20 Vol.-% Isopropanol, 15 Vol.-% tert.-Butanol oder 20 Vol.-% Isobutanol, enthalten können.

Die US 2006/0277820 A1 {3} offenbart Additive zur Kontrolle von Ablagerungen in Ottomotoren, welche eine Mischung aus Polyisobutenaminen des mittleren Molekulargewichtes von etwa 700 bis 1000, insbesondere von etwa 800 (wobei unklar ist, ob es sich um das zahlenmittlere oder das gewichtsmittlere Molekulargewicht handelt), und Mannich-Basen umfasst. Hinweise zur Struktur oder Herstellweise der Polyisobutenamine werden nicht gegeben; der Bezugshinweis für das Polyisobutenamin "PURAD 6847/2 [BASF, Germany]" beruht nicht auf einem der Öffentlichkeit zugänglichem Handelsprodukt.

Die WO 03/085011 A1 {6} beschreibt auf verschiedenen Herstellwegen bezüglich der Einführung der Amin-Funktion erhältliche Polyisobutenamine mit einer engen Verteilung und deren Verwendung als Detergensadditive in Kraftstoffzusammensetzungen. Im Herstellungsbeispiel 1 wird ein Polyisobuten mit einem zahlenmittleren Molekulargewicht Mₙ von 670 offenbart, welches anschließend über eine Hydroborierungsreaktion in das entsprechende Polyisobutenamin übergeführt wird. Dieses Polyisobutenamin enthält kein zusätzlich eingebautes Kohlenstoffatom, wie es bei der Hydroformylierung von Polyisobutenen mit anschließender reduktiver Aminierung der Fall ist. Dokument {6} offenbart zwar auch die mögliche Herstellung von Polyisobutenaminen generell durch Hydroformylierung und anschließende reduktive Aminierung, jedoch nur als eine unter vielen Möglichkeiten.

Die aus dem Stand der Technik bekannten Polyisobutenamin-Kraftstoffdetergentien sind jedoch in ihrem Wirkungsspektrum noch verbesserungsbedürftig. Zwar weisen sie in der Regel eine zufriedenstellende Wirkung bei der Reinigung und Reinhaltung der Einlassventile und des Einlasssystems der Motoren auf, jedoch zeigen sie bei ihrer Wirkung hinsichtlich der Verträglichkeit der Detergentien mit Trägerölen, insbesondere bei tiefen Temperaturen, und/oder bei ihrer Wirkung hinsichtlich der Verträglichkeit in Kraftstoffzusammensetzungen, welche einen mineralischen Kraftstoffanteil und C₁-C₄-Alkanole enthalten, noch Defizite auf. Außerdem sind die bekannten Polyisobutenamine meist zu zähflüssig (zu viskos), so dass bei ihrer Herstellung aufgrund der zeitlich begrenzten Durchflussmengen durch die Apparaturen und Leitungen Kapazitätsengpässe bestehen.

Aufgabe der vorliegenden Erfindung war es daher in einem ersten Aspekt, neue Polyisobutenamine als Kraftstoffadditive bereitzustellen, die neben einer zufriedenstellenden Wirkung bei der Reinigung und Reinhaltung der Einlassventile und des Einlasssystems der Motoren ein Verbesserung der Verträglichkeit der Detergentien mit Trägerölen, vor allem mit Polyether- und Polyetheramin-Trägerölen, insbesondere bei tiefen Temperaturen, bewirken.

Aufgabe der vorliegenden Erfindung war es daher in einem zweiten Aspekt, neue Polyisobutenamine als Kraftstoffadditive bereitzustellen, die neben einer zufriedenstellenden Wirkung bei der Reinigung und Reinhaltung der Einlassventile und des Einlasssystems der Motoren eine Verbesserung der Verträglichkeit in Kraftstoffzusammensetzungen, welche einen mineralischen Kraftstoffanteil und C₁-C₄-Alkanole enthalten, bewirken. Unter "mineralischem Kraftstoffanteil" sollen hier die Kraftstoffkomponenten auf Kohlenwasserstoff-Basis, welche aus dem zugrundeliegenden Erdöl oder den synthetisch erzeugten Kraftstoffkomponenten stammen, verstanden werden.

Aufgabe der vorliegenden Erfindung war es daher in einem dritten Aspekt, neue Polyisobutenamine als Kraftstoffadditive bereitzustellen, die neben einer zufriedenstellenden Wirkung bei der Reinigung und Reinhaltung der Einlassventile und des Einlasssystems der Motoren gleichzeitig die Verträglichkeit der Detergentien mit Trägerölen, vor allem mit Polyether- und Polyetheramin-Trägerölen, insbesondere bei tiefen Temperaturen, verbessern und die Verträglichkeit in Kraftstoffzusammensetzungen, welche einen mineralischen Kraftstoffanteil und C₁-C₄-Alkanole enthalten, verbessern.

Aufgabe der vorliegenden Erfindung war es daher in einem vierten Aspekt, neue Polyisobutenamine als Kraftstoffadditive bereitzustellen, die neben einer zufriedenstellenden Wirkung bei der Reinigung und Reinhaltung der Einlassventile und des Einlasssystems der Motoren gleichzeitig die Verträglichkeit der Detergentien mit Trägerölen, vor allem mit Polyether- und Polyetheramin-Trägerölen, insbesondere bei tiefen Temperaturen, verbessern, die Verträglichkeit in Kraftstoffzusammensetzungen, welche einen mineralischen Kraftstoffanteil und C₁-C₄-Alkanole enthalten, verbessern und dabei ausreichend dünnflüssig sind (d.h eine ausreichend niedrige Viskosität aufweisen), so dass Kapazitätsengpässe bei ihrer Herstellung aufgrund zeitlich begrenzter Durchflussmengen durch die Apparaturen und Leitungen vermieden werden.

Demgemäß wurden die eingangs definierten neuen Polyisobutenamine der allgemeinen Formel I und deren Verwendung als Kraftstoffadditive zur Behebung der oben aufgeführten Defizite im Wirkungsspektrum von Polyisobutenamin-Kraftstoffdetergentien gefunden.

Der Polyisobutylrest R¹ in der allgemeinen Formel I leitet sich von Isobuten und bis 20 Gew.-%, vorzugsweise bis zu 10 Gew.-%, insbesondere bis zu 5 Gew.-%, vor allem bis zu 2 Gew.-% n-Buten ab. Unter n-Buten sollen hier alle linearen ethylenisch ungesättigten C₄-Kohlenwasserstoffe verstanden werden, insbesondere 2-Buten und vor allem 1-Buten. Der Polyisobutylrest R¹ kann sich auch allein von Isobuten ableiten. Der Rest R¹ stellt somit eine mehr oder weniger regelmäßig verzweigte Polymerkette dar, welche überwiegend aus Wiederholungseinheiten der Formel -CH₂-C(CH₃)₂-CH₂-C(CH₃)₂-besteht, wobei bei Einbau von 1-Buten auch Einheiten mit längeren linearen Teilen der Formel -CH₂-(CH₃)₂-(CH₂)₄- auftreten können.

Die Variable R¹ weist ein zahlenmittleres Molekulargewicht Mₙ von 600 bis 770, insbesondere von 650 bis 750, vor allem von 700 bis 730 auf. Ein typischer Wert ist hierbei Mₙ = 720. Das zahlenmittlere Molekulargewicht Mₙ ist bekanntermaßen definiert als das Verhältnis der Masse eines Polymers zur Anzahl der darin enthaltenen Moleküle, d.h. der Messwert hängt von der Anzahl der Makromoleküle und nicht von deren Größe ab. Das zahlenmittlere Molekulargewicht Mₙ wird üblicherweise durch Dampfdruckosmometrie oder Kryometrie bestimmt. Im Gegensatz dazu ist das gewichtsmittlere Molekulargewicht M_{w} von der Größe der Makromoleküle abhängig. Das gewichtsmittlere Molekulargewicht M_{w} wird üblicherweise durch Lichtstreuung oder das Sedimentationsgleichgewicht bestimmt. Bezüglich der mathematischen Definitionen von Mₙ und M_{w} und der Durchführung der experimentellen Bestimmungsmethoden für Mₙ und M_{w} wird auf das einschlägige Fachwissen verwiesen.

Der Polyisobutylrest für die Variable R¹ wird aus einem Polyisobuten erzeugt wurde, das wenigstens eine der folgenden Eigenschaften aufweist:
[a] Anteil an Vinyliden-Doppelbindungen von mindestens 60 Mol-%, vorzugsweise von mindestens 70 Mol-%, insbesondere von mindestens 80 Mol-%, vor allem von mindestens 85 Mol-%, jeweils bezogen auf das Polyisobuten;
[b] Gehalt an Isobuten-Einheiten im Polyisobuten-Polymergerüst von mindestens 85 Gew.-%, vorzugsweise von mindestens 90 Gew.-%, insbesondere von mindestens 95 Gew.-%, vor allem von mindestens 98 Gew.-%:
[c] Polydispersität von 1,05 bis 7, vorzugsweise von 1,1 bis 2,5, insbesondere von 1,1 bis kleiner als 1,9, vor allem von 1,1 bis kleiner als 1,5.

Vorzugsweise weist das zur Erzeugung des Polyisobutylrestes für die Variable R¹ eingesetzte Polyisobuten gleichzeitig die Eigenschaften [a] und [b] oder gleichzeitig die Eigenschaften [a] und [c] oder gleichzeitig die Eigenschaften [b] und [c] oder gleichzeitig die Eigenschaften [a], [b] und [c] auf.

Die oben genannten Polyisobutene mit den Eigenschaften [a] und/oder [b] und/oder [c] sind in der Regel sogenannte "hochreaktive" Polyisobutene, die sich insbesondere durch eine hohen Gehalt an terminal angeordneten Doppelbindungen, also alpha-olefinischen Vinyliden-Doppelbindungen, auszeichnen. Geeignete hochreaktive Polyisobutene sind beispielsweise Polyisobutene, die einen Anteil an Vinyliden-Doppelbindungen von mindestens 60 Mol-%, vorzugsweise von mindestens 70 Mol-%, insbesondere von mindestens 80 Mol-%, vor allem von mindestens 85 Mol-%, aufweisen. Bevorzugt werden auch Polyisobutene, die überwiegend einheitliche Polymergerüste aufweisen. Überwiegend einheitliche Polymergerüste weisen insbesondere solche Polyisobutene auf, die zu wenigstens 85 Gew.-%, vorzugsweise zu wenigstens 90 Gew.-%, insbesondere zu wenigstens 95 Gew.-%, vor allem zu wenigstens aus 98 Mol-% aus Isobuten-Einheiten aufgebaut sind. Darüber hinaus weisen die hochreaktiven Polyisobutene normalerweise eine Polydispersität im Bereich von 1,05 bis 7, vorzugsweise von 1,1 bis 2,5, insbesondere von 1,1 bis kleiner als 1,9, vor allem von 1,1 bis kleiner als 1,5 auf. Unter Polydispersität versteht man den Quotienten aus gewichtsmittlerem Molekulargewicht M_{w} geteilt durch das zahlenmittlere Molekulargewicht Mₙ.

Vorzugsweise setzt man zur Herstellung der erfindungsgemäßen Polyisobutenamine der allgemeinen Formel I die genannten hochreaktiven Polyisobutene mit Kohlenmonoxid und Wasserstoff in einer Hydroformylierungsreaktion in Gegenwart eines Hydroformylierungs-Katalysators, beispielsweise eines Rhodium- oder Kobalt-Katalysators, und gegebenenfalls von geeigneten inerten Lösungsmitteln, beispielsweise Kohlenwasserstoffen, bei typischerweise 80 bis 200°C und CO/H₂-Drücken von bis zu 600 bar um und unterwirft die so hergestellten Oxo-Zwischenprodukte einer reduktiven Aminierung in Gegenwart von Wasserstoff, einer geeigneten Stickstoffverbindung, eines geeigneten Katalysators, beispielsweise Raney-Nickel oder Raney-Kobalt, und gegebenenfalls von geeigneten inerten Lösungsmitteln, beispielsweise Alkoholen und/oder Kohlenwasserstoffen, bei typischerweise 80 bis 200°C und Wasserstoff-Drücken von bis zu 600 bar, insbesondere 80 bis 300 bar. Die als Brückenglied zwischen Polyisobutylrest R¹ und stickstoffhaltiger Gruppierung -NR²R³ auftretende und für die strukturellen Eigenschaften mit maßgebende -CH₂-Gruppierung in der Formel I resultiert aus dem in der Hydroformylierungsstufe zugeführtem Kohlenmonoxid. Die genannten Schritte der Hydroformylierung und der reduktiven Aminierung zur Erzeugung der erfindungsgemäßen Polyisobutenamine I sind dem Fachmann bestens bekannt und beispielsweise in {1} ausführlich beschrieben. Die Herstellung der hierzu eingesetzten hochreaktiven Polyisobutene ist dem Fachmann ebenfalls bestens bekannt; sie erfolgt vorzugsweise durch kationische Polymerisation von reinem Isobuten oder eines technischen C₄-Kohlenwasserstoffstro-mes, welcher reich an Isobuten ist und daneben im wesentlichen 1-Buten, 2-Buten und Butane enthält, beispielsweise Raffinat I, in Gegenwart von Bortrifluorid oder eines Bortrifluorid-Komplexes als Katalysator.

Geeignete Amine, von denen sich die stickstoffhaltiger Gruppierung -NR²R³ in der allgemeinen Formel I ableitet und die in der oben beschriebenen Hydroformylierungsreaktion zur Herstellung der erfindungsgemäßen Polyisobutenamine eingesetzt werden können, sind Verbindungen der Formel HNR²R³. Die Variablen R² und R³ sind darin gleich oder voreinander unabhängig und stehen für:
(1) Wasserstoff;
(2) einen C₁-C₁₈-Alkylrest; als Beispiele für geeignete Alkylreste sind zu nennen geradkettige oder verzweigte Alkylreste mit 1 bis 18 C-Atomen wie Methyl, Ethyl, iso-oder n-Propyl, n-, iso-, sec.- oder tert.-Butyl, n- oder iso-Pentyl; außerdem n-Hexyl, n-Heptyl, n-Octyl, n-Nonyl, n-Decyl, n-Undecyl, n-Tridecyl, n-Tetradecyl, n-Pentadecyl, n-Hexadecyl und n-Octadecyl sowie die ein- oder mehrfach verzweigten Analoga davon; sowie entsprechende Reste, in denen die Kohlenstoffkette eine oder mehrere Etherbrücken aufweist;
(3) einen C₂-C₁₈-Alkenylrest; als Beispiele für geeignete Alkenylreste sind die ein-oder mehrfach, vorzugsweise einfach oder zweifach ungesättigten Analoga oben genannter Alkylreste mit 2 bis 18 Kohlenstoffatomen zu nennen, wobei die Doppelbindung in beliebiger Position der Kohlenstoffkette liegen kann;
(4) einen C₄-C₁₈-Cycloalkylrest; als Beispiele sind zu nennen Cyclobutyl, Cyclopentyl und Cyclohexyl, sowie die mit 1 bis 3 C₁-C₄-Alkylresten substituierten Analoga davon, wobei die C₁-C₄-Alkylreste vorzugsweise ausgewählt sind unter Methyl, Ethyl, iso- oder n-Propyl, n-, iso-, sec.- oder tert.-Butyl;
(5) einen (C₁-C₁₈-Alkyl)arylrest, wobei die C₁-C₁₈-Alkylgruppe wie oben definiert und die Arylgruppe abgeleitet ist von ein- oder zweikernigen kondensierten oder nichtkondensierten 4- bis 7-gliedrigen, insbesondere 6-gliedrigen aromatischen oder heteroaromatischen Gruppen wie Phenyl, Pyridyl, Naphtyl und Biphenylyl.
(6) einen (C₂-C₁₈-Alkenyl)arylrest, wobei die C₂-C₁₈-Alkenylgruppe wie oben definiert und die Arylgruppe ebenfalls wie oben definiert ist;
(7) einen Hydroxy-C₁-C₁₈-alkylrest, wobei dieser den ein- oder mehrfach, vorzugsweise einfach, insbesondere einfach terminal hydroxylierten Analoga obiger C₁-C₁₈ Alkylreste entspricht, beispielsweise 2-Hydroxyethyl und 3-Hydroxypropyl;
(8) einen gegebenenfalls hydroxylierten Poly(oxyalkyl)-Rest, welcher erhältlich ist durch Alkoxylierung des Stickstoffatoms mit 2 bis 10 C₁-C₄-Alkoxygruppen, wobei einzelne Kohlenstoffatome gegebenenfalls weitere Hydroxylgruppen tragen können; bevorzugte Alkoxygruppen umfassen Methoxy-, Ethoxy- und n-Propoxygruppen;
(9) einen Polyalkylenpolyaminrest der Formel

   Z-NH-(C₁-C₆-Alkylen-NH)ₘ-C₁-C₆-Alkylen-

   worin m einen ganzzahligen Wert von 0 bis 5 bedeutet, Z für Wasserstoff oder C₁-C₆-Alkyl steht und C₁-C₆-Alkyl Reste wie Methyl, Ethyl, iso- oder n-Propyl, n-, iso-, sec.-oder tert.-Butyl, n- oder iso-Pentyl oder n-Hexyl bezeichnet, und C₁-C₆-Alkylen für die entsprechenden verbrückenden Analoga dieser Reste steht;
(10) einen Polyalkyleniminrest, aufgebaut aus 1 bis 10 C₁-C₄-Alkylenimingruppen, insbesondere Ethylenimingruppen; oder
(11) zusammen mit dem Stickstoffatom, an das sie gebunden sind, für einen gegebenenfalls substituierten 5 bis 7-gliedrigen, gegebenenfalls mit ein bis drei C₁-C₄-Alkylresten substituierten heterocyclischen Ring, der gegebenenfalls ein weiteres Ringheteroatom wie O oder N trägt.

Typische Beispiele für geeignete Verbindungen der Formel HNR²R³ sind:
- Ammoniak;
- primäre Amine wie Methylamin, Ethylamin, n-Propylamin, Isopropylamin, n-Butylamin, iso-Butylamin, sek.-Butylamin, tert.-Butylamin, Pentylamin, Hexylamin, Cyclopentylamin und Cyclohexylamin; sowie primäre Amine mit Ethersauerstoff- oder Hydroxyl-Funktionen der Formel CH₃-O-C₂H₄-NH₂, C₂H₅-O-C₂H₄-NH₂, CH₃-O-C₃H₆-NH₂, C₂Hₛ-O-C₃H₆-NH₂, n-C₄H₉-O-C₄H₈-NH₂, HO-C₂H₄-NH₂, HO-C₃H₆-NH₂ und HO-C₄H₈-NH₂;

- sekundäre Amine wie z.B. Dimethylamin, Diethylamin, Methylethylamin, Di-n-propylamin, Diisopropylamin, Diisobutylamin, Di-sek.-butylamin, Di-tert.-butylamin, Dipentylamin, Dihexylamin, Dicyclopentylamin, Dicyclohexylamin und Diphenylamin; sowie sekundäre Amine mit Ethersauerstoff- oder Hydroxyl-Funktionen der Formel (CH₃-O-C₂H₄)₂NH, (C₂H₅-O-C₂H₄)₂NH, (CH₃-O-C₃H₆)₂NH, (C₂H₅-O-C₃H₆)₂NH, (n-C₄H₉-O-C₄H₈)₂NH, (HO-C₂H₄)₂NH, (HO-C₃H₆)₂NH und (HO-C₄H₈)₂NH;
- heterocyclische Amine wie Pyrrolidin, Piperidin, Morpholin und Piperazin sowie deren substituierte Derivate wie N-C₁-C₆,-Alkylpiperazine und Dimethylmorpholin;
- Polyamine wie beispielsweise C₁-C₄-Alkylendiamine, Di-C₁-C₄-alkylentriamine, Tri-C₁-C₄-alkylentetramine und höhere Analoga; sowie Polyethylenimine, bevorzugt Oligoethylenimine, bestehend aus 1 bis 10, bevorzugt 2 bis 6 Ethylenimin-Einheiten; Beispiele für geeignete Polyamine und Polyimine sind n-Propylendiamin, 1,4-Butandiamin, 1,6-Hexandiamin, Diethylentriamin, Triethylentetramin, Tetraethylenpentamin, Pentaethylenhexamin, Hexaethylenheptamin und Polyethylenimine sowie deren Alkylierungsprodukte wie beispielsweise 3-(Dimethylamino)-n-propylamin, N,N-Dimethylethylendiamin, N,N-Diethylethylendiamin und N,N,N',N'-Tetramethyldiethylentriamin; ebenfalls geeignet ist Ethylendiamin.

In einer besonders bevorzugten Ausführungsform betrifft die vorliegende Erfindung Polyisobutenamine der allgemeinen Formel I, in der die Gruppierung -NR²R³ aus Ammoniak oder einem Polyamin der allgemeinen Formel II

H₂N-(CH₂CH₂-NH-)ₙ-H (II)

in der die Variable n für eine ganze Zahl von 1 bis 5 steht, erzeugt worden ist.

In einer weiteren besonders bevorzugten Ausführungsform betrifft die vorliegende Erfindung Polyisobutenamine der allgemeinen Formel I mit einer kinematischen Viskosität von 70 bis 200, insbesondere 80 bis 150, vor allem 90 bis 120 cSt, jeweils gemessen in unverdünnter Form bei 100°C. Derartige Viskositätswerte für die Polyisobutenamine I liegen oftmals im Bereich von 95 bis 105 cSt. Die Messung der kinematischen Viskositäten erfolgt hier üblicherweise in einem Ubbelohde-Viskosimeter.

Für die Einstellung der vergleichsweise niedrigen Viskosität der erfindungsgemäßen Polyisobutenamine der allgemeinen Formel I ist die Gesamtheit aller strukturellen Merkmale dieser Polymeren maßgebend. Einflußgrößen sind die Länge (ausgedrückt durch das zahlenmittlere Molekulargewicht Mₙ), die Regelmäßigkeit der Verzweigungen der Polymerkette sowie deren Anknüpfungsstelle an die -CH₂-NR²R³-Gruppierung. Es macht also einen Unterschied, ob die Polymerkette nur aus Isobuten-Einheiten aufgebaut ist (also ein regelmäßiges Verzweigungsmuster aufweist) oder ob lineare n-Buten-Einheiten (als Störung des Verzweigungsmusters) mit eingebaut sind. Weiterhin übt auch die Polydispersität (also der Quotient aus gewichtsmittlerem Molekulargewicht und zahlenmittlerem Molekulargewicht M_{w} / Mₙ) einen Einfluß auf die Viskosität des Polymeren aus. Ein weiterer Einfluß resultiert aus der Art und Größe der NR²R³-Gruppierung an der Polymerkette. Zur Einstellung des gewünschten Viskositätsbereiches ist eine Abstimmung aller genannter Strukturmerkmale aufeinander im Rahmen der vorgenannten Definitionen dieser Strukturmerkmale notwendig. Diese Abstimmung ist nicht vorhersehbar oder vorherberechenbar.

Neben dem reinen mechanischen Vorteil des besseren Durchflusses durch Apparaturen und Leitungen übt die Viskosität auch in nicht vorhersehbarer günstiger Weise Einfluß auf die Wirkungsweise der erfindungsgemäßen Polyisobutenamine der allgemeinen Formel I als Kraftstoffadditive aus. So zeigen die Polyisobutenamine I eine nochmals gesteigerte Wirkung bei der Reduzierung des Ventilklebens, bei der Verbesserung der Verträglichkeit der Detergentien mit Trägerölen, insbesondere bei tiefen Temperaturen, und bei der Verbesserung der Verträglichkeit in Kraftstoffzusammensetzungen, welche einen mineralischen Kraftstoffanteil und C₁-C₄-Alkanole enthalten, wenn sie eine kinematische Viskosität von 70 bis 200, insbesondere 80 bis 150, vor allem 90 bis 120 cSt, jeweils gemessen in unverdünnter Form bei 100°C, aufweisen, ohne dass hierdurch ihre gute Wirkung bei der Reinigung und Reinhaltung der Einlassventile und des Einlasssystems der Motoren beeinträchtigt wird.

Die erfindungsgemäßen Polyisobutenamine der allgemeinen Formel I eignen sich in hervorragender Weise als Kraftstoffadditive mit Detergenzwirkung. Deshalb sind auch Gegenstand der vorliegenden Erfindung Kraftstoffzusammensetzungen, insbesondere solche mit einem Gehalt an C₁-C₄-Alkanolen, welche mindestens ein Polyisobutenamin der allgemeinen Formel I in einer als Detergenz wirksamen Menge enthalten. Neben ihrer zufriedenstellenden bis hervorragenden Wirkung bei der Reinigung und Reinhaltung der Einlassventile und des Einlasssystems der Motoren üben sie darüber hinaus eine Reihe weiterer vorteilhafter Wirkungen als Kraftstoffadditive aus: sie reduzieren das Ventilkleben und/oder sie verbessern die Verträglichkeit der Detergentien mit Trägerölen, vor allem Polyether- und Polyetheramin-Trägerölen, insbesondere bei tiefen Temperaturen, und/oder sie verbessern die Verträglichkeit in Kraftstoffzusammensetzungen, welche einen mineralischen Kraftstoffanteil und C₁-C₄-Alkanole enthalten. Nicht zuletzt sind sie ausreichend dünnflüssig (d.h sie weisen eine ausreichend niedrige Viskosität auf), so dass Kapazitätsengpässe bei ihrer Herstellung aufgrund zeitlich begrenzter Durchflussmengen durch die Apparaturen und Leitungen - auch bei Mitverwendung von inerten Lösungs- oder Verdünnungsmitteln - vermieden werden; die vergleichsweise niedrige Viskosität wirkt sich auch in nicht vorhersehbarer günstiger Weise auf ihre Wirkungsweise als Kraftstoffadditive aus.

Unter "Ventilkleben" (auch "Ventilstecken" genannt) versteht der Fachmann, dass die Ventile aufgrund des Anhaftens von klebrigen Rückständen, insbesondere von Kraftstoffdetergentien, an den Ventilschäften nicht mehr schließen, so dass der Motor nur mit Verzögerung oder gar nicht mehr gestartet werden kann.

Daher ist auch Gegenstand der vorliegenden Erfindung die Verwendung der erfindungsgemäßen Polyisobutenamine der allgemeinen Formel I als Kraftstoffadditive zur Verbesserung der Verträglichkeit der Detergentien mit Trägerölen, vor allem Polyether-und Polyetheramin-Trägerölen, insbesondere bei tiefen Temperaturen. Wenn keine ausreichende Verträglichkeit von Detergentien mit Trägerölen im Sinne der Lagerstabilität von homogen bereiteten Mischungen hieraus besteht, treten bei tiefen Temperaturen Phasenseparationen oder auch schon bei Raumtemperatur Trübungen auf. Unter tiefen Temperaturen sollen hier die Temperaturen verstanden werden, denen Kraftstoffadditivpakete und damit additivierte Kraftstoffe bei Lagerung und Transport ausgesetzt sind, üblicherweise ist dies der Temperaturbereich von +10°C bis -25°C, insbesondere von 0°C bis -20°C. Bei nicht lagerstabilen Mischungen können natürlich Lösungsmittel, beispielsweise Kohlenwasserstoffe wie Xylol, als Lösungsvermittler zugesetzt werden - aus Wirtschaftlichkeitsgründen gilt es natürlich, derartige Lösungsmittelzusätze zu vermeiden.

Daher ist auch weiterhin Gegenstand der vorliegenden Erfindung die Verwendung der erfindungsgemäßen Polyisobutenamine der allgemeinen Formel I als Kraftstoffadditive zur Verbesserung der Verträglichkeit in Kraftstoffzusammensetzungen, welche einen mineralischen Kraftstoffanteil und C₁-C₄-Alkanole enthalten. Wenn keine ausreichende Verträglichkeit der Kraftstoffadditive mit dem mineralischen Kraftstoffanteil sowie den genannten Niedrigalkoholen im Sinne der Stabilität von homogen bereiteten Mischungen hieraus besteht, treten Trübungen auf oder homogene Mischungen lassen sich gar nicht erst herstellen. Dieses technische Problem tritt insbesondere beim Einsatz von in Zukunft immer mehr an Bedeutung gewinnenden Kraftstoffen aus mineralischem Anteil und stark überwiegenden Mengen Niedrigalkohol auf; ein Beispiel eines solchen Kraftstoffes ist "E85", eine Mischung aus 85 Vol.-% Ethanol und 15 Vol.-% mineralischem Ottokraftstoff.

Daher ist auch weiterhin Gegenstand der vorliegenden Erfindung die Verwendung der erfindungsgemäßen Polyisobutenamine der allgemeinen Formel I als Kraftstoffadditive zur gleichzeitigen Verbesserung der Verträglichkeit der Detergentien mit Trägerölen, vor allem Polyether- und Polyetheramin-Trägerölen, insbesondere bei tiefen Temperaturen, und Verbesserung der Verträglichkeit in Kraftstoffzusammensetzungen, welche einen mineralischen Kraftstoffanteil und C₁-C₄-Alkanole enthalten.

Unter Kraftstoffzusammensetzungen sind im Zusammenhang mit der vorliegenden Erfindung vorzugsweise Ottokraftstoffe zu verstehen. Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 {4} mögliche Einsatzgebiete für die erfindungsgemäßen Polyisobutenamine I.

Zum Beispiel ist eine Ottokraftstoffzusammensetzung mit einem Aromatengehalt von maximal 60 Vol.-%, wie beispielsweise maximal 42 Vol.-%, und einem Schwefelgehalt von maximal 2000, wie z.B. maximal 150 Gew.-ppm, zu nennen.

Der Aromatengehalt der Ottokraftstoffzusammensetzung beträgt vorzugssweise maximal 50 Vol.-%, insbesondere 1 bis 45 Vol.-%, vor allem 5 bis 40 Vol.-%. Der Schwefelgehalt des Ottokraftstoffes beträgt vorzugsweise maximal 500 Gew.-ppm, insbesondere 0,5 bis 150 Gew.-ppm, vor allem 1 bis 100 Gew.-ppm.

Weiterhin kann die Ottokraftstoffzusammensetzung beispielsweise einen Olefingehalt bis zu 50 Vol.-%, vorzugsweise von 0,1 bis 21 Vol.-%, insbesondere von 2 bis 18 Vol.-%, einen Benzolgehalt von bis zu 5 Vol.-%, vorzugsweise 0 bis 1,0 Vol.-%, insbesondere 0,05 bis 0,9 Vol.-%, und/oder einen Sauerstoffgehalt von bis zu 47,5 Gew.-%, wie beispielsweise 0,1 bis 2,7 Gew.-% oder beispielsweise 2,7 bis 47,5 Gew.-% (für Ottokraftstoffzusammensetzungen, die überwiegend Niedrigalkohole enthalten), aufweisen.

Insbesondere können auch solche Ottokraftstoffzusammensetzungen beispielhaft genannt werden, welche gleichzeitig einen Aromatengehalt von maximal 38 Vol.-%, einen Olefingehalt von maximal 21 Vol.%, einen Schwefelgehalt von maximal 50 Gew.-ppm, einen Benzolgehalt von maximal 1,0 Vol.-% und einen Sauerstoffgehalt von 0,1 bis 47,5 Gew.-% aufweisen.

Der Sommer-Dampfdruck der Ottokraftstoffzusammensetzung beträgt üblicherweise maximal 70 kPa, insbesondere 60 kPa (jeweils bei 37°C).

Die ROZ der Ottokraftstoffzusammensetzung beträgt in der Regel 75 bis 105. Ein üblicher Bereich für die entsprechende MOZ liegt bei 65 bis 95.

Die genannten Spezifikationen werden nach üblichen Methoden bestimmt (DIN EN 228).

Neben dem Einsatz in Ottokraftstoffen ist jedoch auch eine Verwendung der erfindungsgemäßen Polyisobutenamine I in anderen Kraft- oder Treibstoffenarten, beispielsweise Dieselkraftstoffen, Kerosin oder Turbinenkraftstoffen, prinzipiell möglich. Auch ein Einsatz in Schmierstoffzusammensetzungen ist denkbar.

In einer bevorzugten Ausführungsform enthalten die efindungsgemäßen Kraftstoffzusammensetzungen, insbesondere Ottokraftstoffzusammensetzungen, 0,1 bis 95, besonders bevorzugt 1 bis 90, ganz besonders bevorzugt 5 bis 90, insbesondere 10 bis 90, vor allem 50 bis 90 Vol.-% C₁-C₄-Alkanole als Niedrigalkohol-Kraftstoffkomponenten. Derartige Kraftstoffe sind beispielsweise in der WO 2004/090079 {5} beschrieben. Als C₁-C₄-Alkanole kommen Methanol, n-Propanol, iso-Propanol, n-Butanol, iso-Butanol, sec.-Butanol, tert.-Butanol und insbesondere Ethanol in Betracht; auch Mischungen der genannten C₁-C₄-Alkanole sind als Niedrigalkohol-Kraftstoffkomponenten möglich. Neben den genannten Niedrigalkohol-Kraftstoffkomponenten können die erfindungsgemäßen Kraftstoffzusammensetzung auch noch Ether mit 5 oder mehr Kohlenstoffatomen, beispielsweise Methyl-tert.-butylether, im Molekül in einer Menge bis zu 30 Vol.-% enthalten.

Die erfindungsgemäßen Polyisobutenamine der allgemeinen Formel I können den zu additivierenden Kraftstoffzusammensetzungen einzeln oder im Gemisch mit weiteren wirksamen Additivkomponenten (Co-Additive) zugesetzt werden.

Als Beispiele für derartige Co-Additive können von den erfindungsgemäßen Polyisobutenaminen I verschiedene Additive mit Detergenswirkung und/oder mit ventilsitzverschleißhemmender Wirkung (im folgenden zusammen bezeichnet als Detergensadditive) genannt werden. Ein solches Detergensadditiv besitzt mindestens einen hydrophoben Kohlenwasserstoffrest mit einem zahlengemittelten Molekulargewicht (Mₙ) von 85 bis 20 000 und mindestens eine polare Gruppierung ausgewählt aus:
(a) Mono- oder Polyaminogruppen mit bis zu 6 Stickstoffatomen, wobei mindestens ein Stickstoffatom basische Eigenschaften hat;
(b) Nitrogruppen, gegebenenfalls in Kombination mit Hydroxylgruppen;
(c) Hydroxylgruppen in Kombination mit Mono- oder Polyaminogruppen, wobei mindestens ein Stickstoffatom basische Eigenschaften hat;
(d) Carboxylgruppen oder deren Alkalimetall- oder Erdalkalimetallsalzen;
(e) Sulfonsäuregruppen oder deren Alkalimetall- oder Erdalkalimetallsalzen;
(f) Polyoxy-C₂- bis C₄-alkylengruppierungen, die durch Hydroxylgruppen, Mono-oder Polyaminogruppen, wobei mindestens ein Stickstoffatom basische Eigenschaften hat, oder durch Carbamatgruppen terminiert sind;
(g) Carbonsäureestergruppen;
(h) aus Bernsteinsäureanhydrid abgeleiteten Gruppierungen mit Hydroxy- und/oder Amino- und/oder Amido- und/oder Imidogruppen; und/oder
(i) durch Mannich-Umsetzung von substituierten Phenolen mit Aldehyden und Mono- oder Polyaminen erzeugten Gruppierungen.

Der hydrophobe Kohlenwasserstoffrest in den obigen Detergensadditiven, welcher für die ausreichende Löslichkeit im Kraftstoff sorgt, hat ein zahlengemitteltes Molekulargewicht (Mₙ) von 85 bis 20,000, insbesondere von 113 bis 10,000, vor allem von 300 bis 5000. Als typischer hydrophober Kohlenwasserstoffrest, insbesondere in Verbindung mit den polaren Gruppierungen (a), (c), (h) und (i), kommen der Polypropenyl-, Polybutenyl- und Polyisobutenylrest mit jeweils Mₙ = 300 bis 5000, insbesondere 500 bis 2500, vor allem 700 bis 2300, in Betracht.

Als Beispiele für obige Gruppen von Detergensadditiven seien die folgenden genannt:

Mono- oder Polyaminogruppen (a) enthaltende Additive sind vorzugsweise Polyalkenmono- oder Polyalkenpolyamine auf Basis von Polypropen oder konventionellem (d.h. mit überwiegend mittenständigen Doppelbindungen) Polybuten oder Polyisobuten mit Mn = 300 bis 5000. Geht man bei der Herstellung der Additive von Polybuten oder Polyisobuten mit überwiegend mittenständigen Doppelbindungen (meist in der beta-und gamma-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z.B. Ammoniak, Monoamine oder Polyamine, wie Dimethylaminopropylamin, Ethylendiamin, Diethylentriamin, Triethylentetramin oder Tetraethylenpentamin, eingesetzt werden. Entsprechende Additive auf Basis von Polypropen sind insbesondere in der WO-A-94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A-97/03946 beschrieben sind.

Weitere bevorzugte Monoaminogruppen (a) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in DE-A-196 20 262 beschrieben sind.

Nitrogruppen (b), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A-96/03367 und WO-A-96/03479 beschrieben sind. Diese Umsetzungsprodukte stellen in der Regel Mischungen aus reinen Nitropolyisobutenen (z.B. alpha,beta-Dinitropolyisobuten) und gemischten Hydroxynitropolyisobutenen (z.B. alpha-Nitro-beta-hydroxypolyisobuten) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit Mₙ = 300 bis 5000, mit Ammoniak, Mono- oder Polyaminen, wie sie insbesondere in EP-A-476 485 beschrieben sind.

Carboxylgruppen oder deren Alkalimetall- oder Erdalkalimetallsalze (d) enthaltende Additive sind vorzugsweise Copolymere von C₂-C₄₀-Olefinen mit Maleinsäureanhydrid mit einer Gesamt-Molmasse von 500 bis 20 000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A-307 815 bekannt. Derartige Additive dienen hauptsächlich zur Verhinderung von Ventilsitzverschleiß und können, wie in der WO-A-87/01126 beschrieben, mit Vorteil in Kombination mit üblichen Kraftstoffdetergentien wie Poly(iso)-butenaminen oder Polyetheraminen eingesetzt werden.

Sulfonsäuregruppen oder deren Alkalimetall- oder Erdalkalimetallsalze (e) enthaltende Additive sind vorzugsweise Alkalimetall- oder Erdalkalimetallsalze eines Sulfobemsteinsäurealkylesters, wie er insbesondere in der EP-A-639 632 beschrieben ist. Derartige Additive dienen hauptsächlich zur Verhinderung von Ventilsitzverschleiß und können mit Vorteil in Kombination mit üblichen Kraftstoffdetergentien wie Poly(iso)buten-aminen oder Polyetheraminen eingesetzt werden.

Polyoxy-C₂-C₄-alkylengruppierungen (f) enthaltende Additive sind vorzugsweise Polyether oder Polyetheramine, welche durch Umsetzung von C₂-C₆₀-Alkanolen, C₆-C₃₀-Alkandiolen, Mono- oder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A-310 875, EP-A-356 725, EP-A-700 985 und US-A-4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (g) enthaltende Additive sind vor allem Ester aus Mono-, Di-oder Tricarbonsäuren mit langkettigen Alkanolen oder Polyolen, insbesondere solche mit einer Mindestviskosität von 2 mm²/s bei 100°C, wie sie insbesondere in DE-A-38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino-und/oder Amido- und/oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit Mₙ = 300 bis 5000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Kraftstoffadditive sind insbesondere in US-A-4 849 572 beschrieben.

Durch Mannich-Umsetzung von substituierten Phenolen mit Aldehyden und Mono-oder Polyaminen erzeugte Gruppierungen (i) enthaltende Additive sind vorzugsweise Umsetzungsprodukte von polyisobutensubstituierten Phenolen mit Formaldehyd und Mono- oder Polyaminen wie Ethylendiamin, Diethylentriamin, Triethylentetramin, Tetraethylenpentamin oder Dimethylaminopropylamin. Die polyisobutenylsubstituierten Phenole können aus konventionellem oder hochreaktivem Polyisobuten mit Mₙ = 300 bis 5000 stammen. Derartige "Polyisobuten-Mannichbasen" sind insbesondere in der EP-A-831 141 beschrieben.

Zur genaueren Definition der einzelnen aufgeführten Kraftstoffadditive wird hier auf die Offenbarungen der obengenannten Schriften des Standes der Technik ausdrücklich Bezug genommen.

Die erfindungsgemäßen Polyisobutenamine I können darüber hinaus mit noch weiteren üblichen Komponenten und Additiven kombiniert werden. Hier sind in erster Linie Trägeröle ohne ausgeprägte Detergenswirkung zu nennen.

Geeignete mineralische Trägeröle sind bei der Erdölverarbeitung anfallende Fraktionen, wie Kerosin oder Naphtha, Brightstock oder Grundöle mit Viskositäten wie beispielsweise aus der Klasse SN 500 - 2000; aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500°C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für erfindungsgemäß verwendbare synthetische Trägeröle sind ausgewählt unter: Polyolefinen (Polyalphaolefine oder Polyinternalolefine), (Poly)estern, (Poly)alkoxylaten, Polyethern, aliphatischen Polyetheraminen, alkylphenolgestarteten Polyethern, alkylphenolgestarteten Polyetheraminen und Carbonsäureester langkettiger Alkanole.

Beispiele für geeignete Polyolefine sind Olefinpolymerisate mit Mₙ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂-C₄-alkylengruppierungen enthaltende Verbindungen, welche durch Umsetzung von C₂-C₆₀-Alkanolen, C₆-C₃₀-Alkandiolen, Mono- oder Di-C₂-C₃₀-alkylaminen, C₁-C₃₀-Alkylcyclohexanolen oder C₁-C₃₀-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EPA-310 875, EP-A-356 725, EP-A-700 985 und US-A-4,877,416 beschrieben. Beispielsweise können als Polyetheramine Poly-C₂-C₆-Alkylenoxidamine oder funktionelle Derivate davon verwendet werden. Typische Beispiele hierfür sind Tridecanol-oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen , wie sie insbesondere in der DE-A-38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des Isooctanols, Isononanols, Isodecanols und des Isotridecanols, wie z.B. Di-(n- oder Iso-tridecyl)-phthalat.

Weitere geeignete Trägerölsysteme sind beispielsweise beschrieben in DE-A-38 26 608, DE-A-41 42 241, DE-A-43 09 074, EP-A-0 452 328 und EP-A-0 548 617, worauf hiermit ausdrücklich Bezug genommen wird.

Beispiele für besonders geeignete synthetische Trägeröle sind alkoholgestartete Polyether mit etwa 5 bis 35, wie z.B. etwa 5 bis 30, C₃-C₆-Alkylenoxideinheiten, wie z.B. ausgewählt unter Propylenoxid-, n-Butylenoxid- und iso-Butylenoxid-Einheiten, oder Gemischen davon. Nichtlimitierende Beispiele für geeignete Starteralkohole sind langkettige Alkanole oder mit langkettigem Alkyl substituierte Phenole, wobei der langkettige Alkylrest insbesondere für einen geradkettigen oder verzweigten C₆-C₁₈-Alkylrest steht. Als bevorzugte Beispiele sind zu nennen Tridecanol und Nonylphenol.

Weitere geeignete synthetische Trägeröle sind alkoxylierte Alkylphenole, wie sie in der DE-A-10 102 913 beschrieben sind

Weitere übliche Additive sind Korrosionsinhibitoren, beispielsweise auf Basis von zur Filmbildung neigenden Ammoniumsalzen organischer Carbonsäuren oder von heterocyclischen Aromaten im Falle von Buntmetallkorrosionsschutz; Antioxidantien oder Stabilisatoren, beispielsweise auf Basis von Aminen wie p-Phenylendiamin, Dicyclohexylamin oder Derivaten hiervon oder von Phenolen wie 2,4-Di-tert.-butylphenol oder 3,5-Di-tert.-butyl-4-hydroxyphenylpropionsäure; Demulgatoren; Antistatikmittel; Metallocene wie Ferrocen; Methylcyclopentadienylmangantricarbonyl; Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl; sowie Farbstoffe (Marker). Gegebenenfalls werden auch Amine zur Absenkung des pH-Wertes des Kraftstoffes zugesetzt.

Die Komponenten bzw. Additive können den Kraftstoffzusammensetzungen einzeln oder als vorher zubereitetes Konzentrat (Additivpaket) zusammen mit den erfindungsgemäßen Polyisobutenaminen I zugegeben werden.

Die erfindungsgemäßen Polyisobutenamine der allgemeinen Formel I werden den Kraftstoffzusammensetzungen in einer Menge von 5 bis 5000, vorzugsweise 10 bis 2000, insbesondere 25 bis 1000, vor allem 50 bis 500 Gew.-ppm, jeweils angegeben als Reinsubstanz-Gehalt (also ohne Lösung- und Verdünnungsmittel) und bezogen auf die Gesamtmenge der Kraftstoffzusammensetzung, zugegeben. Werden weitere Detergensadditive mit polaren Gruppierungen (a) bis (i) mitverwendet, beziehen sich die oben angegebenen Dosierraten auf die Gesamtmenge aller Kraftstoffdetergentien einschließlich der erfindungsgemäßen Polyisobutenamine I. Die sonstigen erwähnten Komponenten und Additive werden, wenn gewünscht, in hierfür üblichen Mengen zugesetzt.

Die vorliegende Erfindung wird nun anhand der folgenden, nicht beschränkenden Ausführungsbeispiele näher beschrieben:

### Herstellungsbeispiele

### Beispiel 1: Herstellung eines Polyisobutenamins "P1" aus einem Polyisobuten mit einem zahlenmittleren Molekulargewicht (Mₙ) von 720

In Analogie zu Herstellungsbeispiel 2 aus {2} wurden 500 g eines hochreaktiven Polyisobutens, hergestellt aus Rein-Isobuten, mit einem zahlenmittleren Molekulargewicht (Mₙ) von 720 und einem Anteils an terminalen Vinyliden-Doppelbindung von 81 Mol-%, 180 g eines Lösungsmittelgemisches aus n-Paraffinen / Naphthenen sowie 2,8 g Kobaltoctacarbonyl 5 Stunden bei 185°C in einem 2,5 I Hubrührautoklaven unter Rühren bei 280 bar CO/H₂ (1:1 Vol./Vol.) erhitzt. Anschließend wurde das Gemisch auf Raumtemperatur abgekühlt, der Katalysator mit 400 ml 10 %gew.-%iger wässriger Essigsäure entfernt und das Gemisch neutral gewaschen. Das resultierende Oxoprodukt wird mit 1 I Ammoniak, 300 g Ethanol und 100 g Raney-Kobalt in einem 5 I Rollautoklaven unter einem Wasserstoffdruck von 200 bar bei 180 °C 5 Stunden behandelt. Nach Abkühlen des Gemisches wurde der Katalysator abfiltriert, überschüssiger Ammoniak abgedampft und das Lösungsmittel abdestilliert. Es resultierten 520 g eines entsprechenden Polyisobutenamins mit endständiger -CH₂NH₂-Gruppierung mit einer kinematischen Viskosität von 98 cSt, gemessen in unverdünnter Form bei 100°C in einem Ubbelohde-Viskosimeter.

### Anwendungsbeispiele

In den nachfolgenden Anwendungsbeispielen wurde zum Vergleich jeweils ein Polyisobutenamin "P2" aus einem homologen hochreaktiven Polyisobuten, hergestellt aus Rein-Isobuten, mit einem zahlenmittleren Molekulargewicht (Mₙ) von 1000 mit endständiger -CH₂NH₂-Gruppierung eingesetzt. P2 wies eine kinematische Viskosität von 241 cSt, gemessen in unverdünnter Form bei 100°C in einem Ubbelohde-Viskosimeter, auf.

### Beispiele 2a-2e: Einlassventilsauberkeit bei Ottomotoren

Die Überprüfung der Einlassventilsauberkeit bei Ottomotoren wurden mit einem Mercedes Benz M 111-Prüfmotor nach CEC F-20-A-98 (bei Beispiel 2a) bzw. einem Mercedes Benz M 102E-Prüfmotor nach CEC F-05-A-93 (bei Beispielen 2b-2e) durchgeführt. Als Grundkraftstoff diente ein Eurosuper-Kraftstoff gemäß EN 228. Gemessen wurden die Ablagerungen auf den vier Einlassventilen, woraus jeweils der Mittelwert gebildet wurde. Bei den Beispielen 2a und 2b wurden jeweils nur die reinen Polyisobutenamine P1 bzw. P2 zudosiert, bei den Beispielen 2c-2e jeweils handelsübliche oder handelsüblich nachgestellte Additivpakete, die zusätzlich - neben weiteren Co-Additiven in geringer Menge, welche aber auf die Einlassventilsauberkeit keinen Einfluß ausüben - Polyether-Trägeröle enthielten. Die angegebenen Dosiermengen der jeweiligen Additive in Gew.-ppm (angegeben als Reinsubstanz-Gehalt, ohne Lösungsmittel) beziehen sich jeweils auf die Gesamtmenge der eingesetzten Ottokraftstoff-Formulierung. Die nachfolgende Tabelle 1 zeigt die Resultate der Messungen.

**Tabelle 1: Messungen der Einlaßventilsauberkeit**

| Beispiele | | Mittelwert der Ablagerungen in mg/Ventil |
|---|---|---|
| 2a | Grundwert (Kraftstoff ohne Additive) | 154 |
| | P1 (137 Gew.-ppm) | 33 |
| | P2 (137 Gew.-ppm) | 16 |
| 2b | Grundwert (Kraftstoff ohne Additive) | 313 |
| | P1 (109 Gew.-ppm) | 39 |
| | P2 (109 Gew.-ppm) | 54 |
| 2c | Grundwert (Kraftstoff ohne Additive) | 518 |
| | P1 (130 Gew.-ppm) + T1 (155 Gew.-ppm) | 13 |
| | P2 (130 Gew.-ppm) + T1 (155 Gew.-ppm) | 20 |
| 2d | Grundwert (Kraftstoff ohne Additive) | 313 |
| | P1 (118 Gew.-ppm) + T1 (49 Gew.-ppm) | 8 |
| | P2 (118 Gew.-ppm) + T1 (49 Gew.-ppm) | 13 |
| 2e | Grundwert (Kraftstoff ohne Additive) | 313 |
| | P1 (70 Gew.-ppm) + T1 (54 Gew.-ppm) | 78 |
| | P2 (70 Gew.-ppm) + T1 (54 Gew.-ppm) | 56 |

"T1" ist ein handelsübliches Polyether-Trägeröl der Struktur eines mit 22 Mol Butylenoxid umgesetzten Tridecanols.

Aus den Beispielen 2a-2e geht deutlich hervor, dass im Rahmen der üblichen Streuung der Resultate aufgrund der Messungenauigkeit der Methode beim Einsatz des erfindungsgemäßen Polyisobutenamins P1 eine vergleichbare Wirksamkeit in der Einlaßsystemsauberhaltung wie beim Polyisobutenamin P2 des Standes der Technik vorhanden ist.

### Beispiele 3a und 3b: Verhalten beim Ventilkleben

Die Überprüfung des Verhaltens beim Ventilkleben wurde durch Untersuchungen im VW-Wasserboxer-Test nach CEC F-16-T-96 vorgenommen. Als Grundkraftstoff diente ein Eurosuper-Kraftstoff gemäß EN 228. Geprüft wurde nach den Kriterien der Testvorschrift, ob ein "Pass" (kein Ventilkleben in drei aufeinander folgenden Testläufen) oder ein "Fail" (Ventilkleben im ersten, zweiten oder dritten der aufeinander folgenden Testläufe) erfolgte. Das Ventilkleben macht sich hierbei dadurch bemerkbar, dass sich der Motor nur mit Verzögerung oder gar nicht mehr starten lässt. Um eine Differenzierung zu ermöglichen, wurde absichtlich im Grenzbereich des zu erwartenden Ventilklebens getestet. Die angegebenen Dosiermengen der jeweiligen Additive in Gew.-ppm (angegeben als Reinsubstanz-Gehalt, ohne Lösungsmittel) beziehen sich jeweils auf die Gesamtmenge der eingesetzten Ottokraftstoff-Formulierung. Die beiden nachfolgenden Tabellen zeigen die Resulte der Tests.

**Tabelle 2: Beispiel 3a - Ventilklebe-Tests mit reinem Polyisobutenaminen**

| | |
|---|---|
| P2 (80 Gew.-ppm), zum Vergleich | Fail (Kleben im 2. Testlauf) |
| P1 (80 Gew.-ppm), erfindungsgemäß | Pass |
| P1 (160 Gew.-ppm), erfindungsgemäß | Fail (Kleben im 1. Testlauf) |

Im Vergleich zu P2 ist das erfindungsgemäße P1 bei gleicher Dosiermenge weniger anfällig für Ventilkleben. Daß Ventilkleben grundsätzlich nicht zu beseitigen ist, zeigt der Test mit 160 Gew.-ppm P1. Aus diesem Grunde wird in der Praxis immer Trägeröl mitverwendet.

**Tabelle 3: Beispiel 3b - Ventilklebe-Tests mit Polyisobutenamin-Trägeröl-Mischungen**

| | |
|---|---|
| P1 (154 Gew.-ppm) + T1 (15 Gew.-ppm) | Pass |
| P2 (154 Gew.-ppm) + T1 (15 Gew.-ppm) | Fail (Kleben im 1. Testlauf) |
| P2 (154 Gew.-ppm) + T1 (30 Gew.-ppm) | Fail (Kleben im 1. Testlauf) |
| P2 (154 Gew.-ppm) + T1 (45 Gew.-ppm) | Pass |

"T1" ist ein handelsübliches Polyether-Trägeröl der Struktur eines mit 22 Mol Butylenoxid umgesetzten Tridecanols.

Das Ventilkleben lässt sich durch Zugabe von Trägeröl vermeiden, allerdings wird bei P2 des Standes der Technik dazu die dreifache Menge an Trägeröl benötigt wie beim erfindungsgemäßen P1.

### Beispiel 4: Mischversuche zur Verträglichkeit von Detergentien mit Trägerölen bei tiefen Temperaturen

Die Verträglichkeit und Lagerstabilität von Polyisobutenaminen und Polyether-Trägerölen wurden bei 20°C (Raumtemperatur), 0°C und -20°C untersucht. Dazu wurden jeweils 60 Gew.-Teile einer 50 gew.-%igen Lösung von P1 oder P2 in einer hierzu üblichen Kohlenwasserstoffmischung als Verdünnungsmittel mit 40 Gew.-Teilen des Polyether-Trägeröls T2 oder T3 bei den angegebenen Temperaturen gemischt und die Homogenität der Mischung wurde visuell beurteilt. "T2" ist ein handelsübliches Polyether-Trägeröl der Struktur eines mit 15 Mol Propylenoxid umgesetzten Tridecanols, "T3" ist ein handelsübliches Polyether-Trägeröl der Struktur eines mit 30 Mol Propylenoxid umgesetzten Tridecanols. Die verwendeten Trägeröle auf Basis von Propylenoxid sind bekannt dafür, dass bei tiefen Temperaturen leicht Phasenseparation und sogar schon bei Raumtemperatur leicht Trübung auftritt. Diese unerwünschten Effekte müssen in der Praxis durch Zugabe teilweise beträchtlicher Mengen an zusätzlichem Lösungsmittel, beispielsweise Xylol, behoben werden. Die Ergebnisse der Mischversuche sind in der nachfolgenden Tabelle zusammengefasst.

**Tabelle 4: Mischversuche von Polyisobutenaminen mit Polyether-Trägerölen**

| | 20°C | 0°C | -20°C |
|---|---|---|---|
| P1 + T2 | klare Lösung | klare Lösung | klare Lösung |
| P2 + T2 | klare Lösung | klare Lösung | Phasenseparation |
| P1 + T3 | klare Lösung | klare Lösung | klare Lösung |
| P2 + T3 | Trübung | Phasenseparation | Phasenseparation |

Die Ergebnisse zeigen die deutlich bessere Verträglichkeit des erfindungsgemäßen P1 mit den Polyether-Trägerölen im Vergleich zu P2 des Standes der Technik.

### Beispiel 5: Mischversuche zur Verbesserung der Verträglichkeit von Polyisobutenamin in einem Gemisch von mineralischem Ottokraftstoff mit Ethanol

Der Einfluß von Polyisobutenaminen auf die Verbesserung der Verträglichkeit in einem Gemisch von mineralischem Ottokraftstoff mit Ethanol im Hinblick auf die Herstellung von "E85"-Kraftstoff wurde anhand von P1 und P2 untersucht. Dazu wurden äquivalente Mengen von jeweils 0,1 g P1 bzw. P2 (Reinsubstanz, ohne Lösungsmittel) in 30 ml nicht additiviertem Eurosuper-Kraftstoff gemäß EN 228 ("OK") vorgelöst (solch hohe "Dosierraten" sind in der Praxis unüblich, d.h. die hierbei auftretenden Trübungen würden mit praxisüblichen Dosierraten deutlich geringer ausfallen). Danach wurde mit Ethanol auf 200 ml aufgefüllt, was in etwa der Zusammensetzung des "E85"-Kraftstoffes entspricht. Dabei wurde beobachtet, wann eine merklich Trübung auftrat. Die nachfolgende Tabelle zeigt die Ergebnisse der Untersuchung.

**Tabelle 5: Mischversuche von Ottokraftstoff mit Ethanol**

| Trübung bei Zugabe von | | Vol.-Verhältnis Ethanol zu OK | Endzustand im "E85" |
|---|---|---|---|
| P1 | 120 ml Ethanol | 4:1 | schwache Trübung |
| P2 | 60 ml Ethanol | 2:1 | starke Trübung |

Diese Ergebnisse zeigen den deutlich stärken Einfluß des erfindungsgemäßen P1 auf die Verbesserung der Verträglichkeit von Polyisobutenamin in einem Gemisch von mineralischem Ottokraftstoff mit Ethanol gegenüber P2 des Standes der Technik. Während mit P2 bereits bei einem Vol.-Verhältnis Ethanol : OK von 2:1 merkliche Trübung auftritt, kann bei P1 das Vol.-Verhältnis Ethanol : OK bis 4:1 erhöht werden, bis Trübung auftritt. Auch im "E85"-Kraftstoff (Vol.-Verhältnis Ethanol : OK = 5,7 : 1) zeigt P1 deutlich weniger Trübung.

### Beispiel 6: Einfluß der Viskosität des Polyisobutenamins auf das Durchflußverhalten

Der Vorteil eines niedrigerviskosen Polyisobutenamins im Hinblick auf das bessere Durchflußverhalten durch Apparaturen und Leitungen wird an der Menge an Lösungs- bzw. Verdünnungsmittel ersichtlich, die benötigt wird, um die gleich absolute Menge an Polyisobutenamin in der gleichen Zeiteinheit durchzusetzen. In einem typischen Herstellprozeß für P2 (kinematische Viskosität von 241 cSt unverdünnt bei 100°C) resultierte bei einer Einstellung der Verdünnung des Endproduktes mit einem üblichen Kohlenwasserstoffgemisch auf einen Polymergehalt von 65 Gew.-% der gleiche Volumenstrom pro Zeiteinheit wie bei dem analogen Herstellprozeß für das erfindungsgemäße P1 (kinematische Viskosität von 98 cSt unverdünnt bei 100°C) bei einer Einstellung der Verdünnung des Endproduktes mit dem gleichen Kohlenwasserstoffgemisch auf einen Polymergehalt von 71 Gew.-%. Das bedeutet ein Produktionssteigerung für P1 von 9 % an aktivem Polymer, gelöst in weniger Verdünnungsmittel.

## Patentansprüche

1. Polyisobutenamine der allgemeinen Formel I
R¹-CH₂-NR²R³ (I)
in der
die Variable R¹ einen von Isobuten und bis zu 20 Gew.-% n-Buten abgeleiteten Polyisobutylrest mit einem zahlenmittleren Molekulargewicht Mₙ von 600 bis 770 darstellt und
die Variablen R² und R³ unabhängig voneinander für Wasserstoff, einen C₁-C₁₈-Alkyl-, C₂-C₁₈-Alkenyl-, C₄-C₁₈-Cycloalkyl-, C₁-C₁₈-Alkylaryl-, Hydroxy-C₁-C₁₈-alkyl-, Poly(oxyalkyl)-, Polyalkylenpolyamin- oder einen Polyalkylenimin-Rest o-oder zusammen mit dem Stickstoffatom, an das sie gebunden sind, für einen heterocyclischen Ring stehen,
welche durch Umsetzung eines Polyisobutens, das wenigstens eine der folgenden Eigenschaften aufweist:
[a] Anteil an Vinyliden-Doppelbindungen von mindestens 60 Mol-%, bezogen auf das Polyisobuten;
[b] Gehalt an Isobuten-Einheiten im Polyisobuten-Polymergerüst von mindes tens 85 Gew.-%;
[c] Polydispersität von 1,05 bis 7
mit Kohlenmonoxid und Wasserstoff in einer Hydroformylierungsreaktion in Gegenwart eines Hydroformylierungs-Katalysatores und Unterwerfung des so hergestellten Oxo-Zwischenproduktes einer reduktiven Aminierung in Gegenwart von Wasserstoff, einer geeigneten Stickstoffverbindung und eines geeigneten Katalysators erzeugt wurden.

2. Polyisobutenamine der allgemeinen Formel I nach Anspruch 1, in der die Variable R¹ ein zahlenmittleres Molekulargewicht Mₙ von 700 bis 730 aufweist.

3. Polyisobutenamine der allgemeinen Formel nach Anspruch 1 oder 2, in der die Gruppierung -NR²R³ aus Ammoniak oder einem Polyamin der allgemeinen Formel II
H₂N-(CH₂CH₂-NH-)ₙ-H (II)
in der die Variable n für eine ganze Zahl von 1 bis 5 steht, erzeugt worden ist.

4. Polyisobutenamine der allgemeinen Formel I nach den Ansprüchen 1 bis 3 mit einer kinematischen Viskosität von 70 bis 200 cSt, gemessen in unverdünnter Form bei 100°C.

5. Kraftstoffzusammensetzungen, enthaltend mindestens ein Polyisobutenamin der allgemeinen Formel I gemäß Anspruch 1 in einer Menge von 5 bis 5000 Gew.-ppm.

6. Kraftstoffzusammensetzungen nach Anspruch 5, enthaltend 0,1 bis 95 Vol.-% C₁-C₄-Alkanote, bezogen auf das Gesamtgewicht der Zusammensetzung.

7. Verwendung von Polyisobutenaminen der allgemeinen Formel I gemäß Anspruch 1 als Kraftstoffadditive zur Verbesserung der Verträglichkeit der Detergentien mit Trägerölen.

8. Verwendung von Polyisobutenaminen der allgemeinen Formel 1 gemäß Anspruch 1 als Kraftstoffadditive zur Verbesserung der Verträglichkeit in Kraftstoffzusammensetzungen, welche einen mineralischen Kraftstoffanteil und C₁-C₄-Alkanole enthalten.

## Claims

1. A polyisobuteneamine of the general formula I
R¹-CH₂-NR²R³ (I)
in which
the variable R¹ is a polyisobutyl radical which is derived from isobutene and up to 20% by weight of n-butene and has a number-average molecular weight Mₙ of from 600 to 770, and
the variables R² and R³ are each independently hydrogen, a C₁-C₁₈-alkyl, C₂-C₁₈-alkenyl, C₄-C₁₈-cycloalkyl, C₁-C₁₈-alkylaryl, hydroxy-C₁-C₁₈-alkyl, poly(oxyalkyl), polyalkylenepolyamine or polyalkyleneimine radical or, together with the nitrogen atom to which they are bonded, are a heterocyclic ring,
which has been obtained by reacting a polyisobutene which has at least one of the following properties:
[a] proportion of vinylidene double bonds of at least 60 mol%, based on the polyisobutene;
[b] content of isobutene units in the Polyisobutene polymer skeleton of at least 85% by weight;
[c] polydispersity of from 1.05 to 7
with carbon monoxide and hydrogen in a hydroformylation reaction in the presence of a hydroformylation catalyst, and subjecting the oxo intermediate thus prepared to a reductive amination in the presence of hydrogen, of a suitable nitrogen compound and of a suitable catalyst.

2. A polyisobuteneamine of the general formula I according to claim 1, in which the variable R¹ has a number-average molecular weight Mₙ of from 700 to 730.

3. A polyisobuteneamine of the general formula I according to claim 1 or 2, in which the -NR²R³ moiety has been obtained from ammonia or a polyamine of the general formula II
H₂N-(CH₂CH₂-NH-)ₙ-H (II)
in which the variable n is an integer from 1 to 5.

4. A polyisobuteneamine of the general formula I according to claims 1 to 3 with a kinematic viscosity of from 70 to 200 cSt, measured in undiluted form at 100°C.

5. A fuel composition comprising at least one polyisobuteneamine of the general formula I according to claim 1 in an amount of from 5 to 5000 ppm by weight.

6. The fuel composition according to claim 5, comprising from 0.1 to 95% by volume of C₁-C₄-alkanols, based on the total weight of the composition.

7. The use of polyisobuteneamines of the general formula I according to claim 1 as fuel additives for improving the compatibility of the detergents with carrier oils.

8. The use of polyisobuteneamines of the general formula I according to claim 1 as fuel additives for improving compatibility in fuel compositions which comprise a mineral fuel content and C₁-C₄-alkanols.

## Revendications

1. Polyisobutène-amines de formule générale I
R¹-CH₂-NR²R³ (I)
dans laquelle
la variable R¹ représente un radical polyisobutyle dérivé d'isobutène et de jusqu'à 20 % en poids de n-butène, ayant une masse moléculaire moyenne en nombre Mₙ de 600 à 770 et
les variables R² et R³ représentent, indépendamment l'une de l'autre, un atome d'hydrogène, un radical alkyle en C₁-C₁₈, alcényle en C₂-C₁₈, cycloalkyle en C₄-C₁₈, alkyl (C₁-C₁₈) aryle, hydroxyalkyle (C₁-C₁₈), poly(oxyalkyle), polyalkylène-polyamino ou un radical polyalkylène-imino ou forment ensemble, avec l'atome d'azote auquel elles sont liées, un cycle hétérocyclique,
qui ont été produites par mise en réaction d'un polyisobutène, qui présente au moins l'une des propriétés suivantes :
[a] proportion de doubles liaisons vinylidène d'au moins 60 % en moles, par rapport au polyisobutène ;
[b] teneur en motifs isobutène du squelette polymère polyisobutène d'au moins 85 % en poids ;
[c] polydispersité de 1,05 à 7
avec du monoxyde de carbone et de l'hydrogène, dans une réaction d'hydroformylation en présence d'un catalyseur d'hydroformylation et exposition du produit intermédiaire oxo ainsi préparé à une amination réductrice en présence d'hydrogène, d'un composé azoté approprié et d'un catalyseur approprié.

2. Polyisobutène-amines de formule générale I selon la revendication 1, dans lesquelles la variable R¹ présente une masse moléculaire moyenne en nombre Mₙ de 700 à 730.

3. Polyisobutène-amines de formule générale I selon la revendication 1 ou 2, dans lesquelles le groupement -NR²R³ a été produit à partir d'ammoniac et d'une polyamine de formule générale II
H₂N-(CH₂CH₂-NH-)ₙ-H (II)
dans laquelle la variable n représente un nombre entier valant de 1 à 5.

4. Polyisobutène-amines de formule générale I selon les revendications 1 à 3, ayant une viscosité cinématique de 70 à 200 cSt, mesurée sous forme non diluée, à 100 °C.

5. Compositions de carburants, contenant au moins une polyisobutène-amine de formule générale I selon la revendication 1, en une quantité de 5 à 5 000 ppm en poids.

6. Compositions de carburants selon la revendication 5, contenant 0,1 à 95 % en volume d'alcanols en C₁-C₄, par rapport au poids total de la composition.

7. Utilisation de polyisobutène-amines de formule générale I selon la revendication 1, en tant qu'additifs à des carburants, pour l'amélioration de la compatibilité des détergents avec des huiles de support.

8. Utilisation de polyisobutène-amines de formule générale I selon la revendication 1, en tant qu'additifs à des carburants, pour l'amélioration de la compatibilité dans des compositions de carburants qui contiennent une fraction carburant minéral et des alcanols en C₁-C₄.
